# EUROPÄISCHE PATENTSCHRIFT

(11) **EP 4 396 487 B1**
(45) Veröffentlichungstag und Bekanntmachung des Hinweises auf die Patenterteilung: **21.05.2025**
(21) Anmeldenummer: 22758476.0
(22) Anmeldetag: 29.07.2022
(51) Int. Cl.: F17C 13/04

(54) **MAGNETVENTIL SOWIE WASSERSTOFFTANKSYSTEM MIT MAGNETVENTIL**
SOLENOID VALVE AND HYDROGEN TANK SYSTEM COMPRISING SOLENOID VALVE
ÉLECTROVANNE ET SYSTÈME DE RÉSERVOIR D'HYDROGÈNE COMPRENANT UNE ÉLECTROVANNE

(30) Priorität: 30.08.2021 DE 102021209468
(43) Veröffentlichungstag der Anmeldung: 10.07.2024
(73) Patentinhaber: Robert Bosch GmbH, 70442 Stuttgart (DE)
(72) Erfinder: SCHAICH, Udo, 70378 Stuttgart (DE); RAU, Andreas, 70469 Stuttgart (DE); SOUBARI, Joachim, 76275 Ettlingen (DE)
(86) Internationale Anmeldenummer: PCT/EP2022/071345
(87) Internationale Veröffentlichungsnummer: WO 2023/030787

(56) Entgegenhaltungen:
- WO-A1-2020/158728
- DE-A1- 102018 221 600
- US-A1- 2014 239 207
- US-A1- 2015 184 805
- US-A1- 2018 038 507
- US-B2- 6 675 831

## Beschreibung

Die Erfindung betrifft ein Magnetventil, insbesondere ein Absperrventil für Wasserstofftanksysteme. Ferner betrifft die Erfindung ein Wasserstofftanksystem mit einem erfindungsgemäßen Magnetventil als Absperrventil.

### Stand der Technik

Bei Magnetventilen mit großen Hüben, wie dies beispielsweise bei Absperrventilen für Wasserstofftanksysteme der Fall ist, kommen üblicherweise Magnetaktoren mit Tauchanker zum Einsatz. Denn bei diesen geht die Magnetkraft mit zunehmendem Abstand zwischen Anker und dessen feststehendem Anschlag weniger stark zurück als bei Flachankerkonstruktionen.

Aus der DE 10 2018 221 602 A1 geht beispielhaft eine Tankvorrichtung zur Speicherung von Wasserstoff mit einer elektromagnetisch betätigbaren Ventileinrichtung hervor, die ein mit einem Ventilsitz zusammenwirkendes bewegliches Ventilelement zum Öffnen und Schließen einer Auslassöffnung aufweist. Das Ventilelement ist in Richtung des Ventilsitzes von der Federkraft einer Feder beaufschlagt, so dass bei unbestromter Magnetspule die Ventileinrichtung geschlossen ist. In Offenstellung gibt das Ventilelement eine Auslassöffnung mit einem Durchmesser sowie einen hieran anschließenden Durchlasskanal frei. Das Ventilelement bildet zugleich einen Magnetanker aus, der nach dem Tauchankerprinzip arbeitet. Wird die Magnetspule bestromt, bildet sich ein die Spule umschließendes Magnetfeld aus, dessen Feldlinien sich über einen Außenpolkörper, einen Innenpolkörper und den Magnetanker erstrecken. Die Feldlinien verlaufen dabei über einen radialen und einen axialen Luftspalt zwischen dem Magnetanker und dem Außenpolkörper. Mit Hilfe der im axialen Luftspalt entstehenden Magnetkraft kann der Magnetanker bzw. das Ventilelement entgegen der Federkraft der Feder aus dem Dichtsitz gehoben werden, so dass das Magnetventil öffnet.

Bei einem Magnetventil mit Tauchanker, wie es beispielhaft in der DE 10 2018 221 602 A1 beschrieben wird, führt die Feldeinkopplung über den radialen Luftspalt zu einer Schwächung des Magnetfelds im axialen Luftspalt. Die Folge ist eine Verringerung der auf den Magnetanker in Öffnungsrichtung wirkenden Magnetkraft. Das heißt, dass eine größere Magnetspule erforderlich, wodurch der Bauraumbedarf steigt.

Die US 2014/239207 A1 offenbart ein Magnetventil, insbesondere Absperrventil geeignet für einen Gastank, umfassend einen hubbeweglichen Magnetanker, der mit einem hubbeweglichen Ventilglied gekoppelt ist.

In der US 2018/038507 wird eine Ventillvorrichtung gezeigt, die ein Hauptventilelement umfasst, das den Raum eines Ventilelements eines Gehäuses in die erste und zweite Druckkammer unterteilt.

Die DE 10 2018 221600 A1 offenbart ein Verfahren zum Betreiben einer Tankvorrichtung zur Speicherung von verdichteten Fluiden mit einem Tank, einer Ventilvorrichtung, einer Zuführleitung, einem in der Zuführleitung angeordneten Durchflusselement und einer Steuereinheit.

In der WO 2020/158728 A1 ist ein Magnetventil für Gas gezeigt, welches mit einem Gehäuse versehen ist, das einen ersten Anschluss, einen zweiten Anschluss und eine Ventilöffnung aufweist.

Die US 2015/184805 A1 offenbart ein Flüssigkeitsregelventil, aufweisend einen Hauptventilkörper mit einem ersten Strömungskanal, der an einem Einlass montiert ist und durch den ein zugeführtes Gas strömt.

US 6 675 831 B2 zeigt eine Hochdruck Tankvorrichtung bestehend aus einem Hochdruck-Tank, in welchem sich ein Hochdruck Gas befindet, und einem Ventil-Mechanismus, welcher an einem Auslass des Hochdruck-Tanks vorgesehen ist.

Die vorliegende Erfindung versucht hier Abhilfe zu schaffen, indem ein Magnetventil mit einer optimierten Feldlinienführung bereitgestellt wird. Das Magnetventil weist die Merkmale des Anspruchs 1 auf. Vorteilhafte Weiterbildungen der Erfindung sind den Unteransprüchen zu entnehmen. Darüber hinaus wird ein Wasserstofftanksystem mit einem erfindungsgemäßen Magnetventil angegeben.

### Offenbarung der Erfindung

Das vorgeschlagene Magnetventil, insbesondere Absperrventil für Wasserstofftanksysteme, umfasst einen hubbeweglichen Magnetanker, der mit einem hubbeweglichen Ventilglied gekoppelt oder koppelbar ist. Der Magnetanker ist dabei in Richtung des Ventilglieds mittels einer Feder vorgespannt. Das Magnetventil umfasst ferner eine ringförmige Magnetspule zur Einwirkung auf den Magnetanker, wobei die Magnetspule den Magnetanker abschnittsweise umgibt. Erfindungsgemäß weist der Magnetanker einen als Tauchanker ausgeführten Abschnitt und einen als Flachanker ausgeführten Abschnitt auf, wobei der als Tauchanker ausgeführte Abschnitt innerhalb der Magnetspule einen Druckraum begrenzt, der, vorzugsweise über eine Drossel, pneumatisch mit einem Steuerraum verbunden ist, der durch Öffnen eines ebenfalls mit Hilfe der Magnetspule betätigbaren Steuerventils entlastbar ist.

Die den Druckraum begrenzende Fläche des Magnetankers wirkt als Druckfläche, so dass der im Druckraum herrschende Druck eine auf den Magnetanker in Schließrichtung bzw. in Richtung eines Dichtsitzes wirkende pneumatische Kraft ausübt. Die Druckfläche ist auf der gegenüberliegenden Seite mit dem Ventilraum verbunden, in den der Magnetanker hineinragt. Der im Ventilraum herrschende Druck bewirkt somit ein auf den Magnetanker in Öffnungsrichtung wirkende pneumatische Kraft. Bei gleichem Druck im Druckraum und Ventilraum ist die resultierende Kraft des Kräftepaares an den sich gegenüberliegenden Druckfläche gleich Null. Das heißt, dass sie sich gegenseitig aufheben. Die Erfindung beruht auf der Idee, dass der Druck im Druckraum gegenüber dem Ventilraum abgesenkt werden kann.

Bei dem vorgeschlagenen Magnetventil wirkt demnach nicht nur die mittels der Magnetspule erzeugte Magnetkraft auf den Magnetanker, sondern ferner eine öffnende pneumatische Kraft, die sich aufgrund einer Druckdifferenz zwischen dem abgesenkten Druck im Druckraum innerhalb der Magnetspule sowie dem Druck im Ventilraum ergibt. Die Absenkung des Drucks im Druckraum erfolgt über die Druckabsenkung im angrenzenden Steuerraum, welcher pneumatisch mit dem Druckraum verbunden ist, wobei die Verbindung vorteilhafterweise in Form einer Drossel ausgeführt ist. Die Druckabsenkung im Steuerraum wiederum erfolgt durch das Betätigen eines Steuerventils, das hierzu bevorzugt mit einem Drucksystem, insbesondere einem Leitungssystem, verbunden ist, das beispielsweise der Versorgung einer Brennstoffzelle oder eine Verbrennungskraftmaschine mit Brennstoff dient. Die für eine Druckabsenkung im Druckraum notwendige pneumatische Trennung vom Ventilraum kann hierbei über eine entsprechend enge Führung des Magnetankers, über Dichtelemente im Führungsbereich und/oder über Membrandichtungen erfolgen. Damit nach Beendigung der Ansteuerung und dem damit verbundenen Schließen des Steuerventils ein sicheres Schließen des Hauptventils erfolgen kann, ist es notwendig, eine Rückbefüllung des Druck- bzw. Steuerraums zu ermöglichen. Dies kann durch eine pneumatische Verbindung zwischen dem Ventilraum und dem Druckraum in Form einer Drosselbohrung, der sogenannten Zulauf- bzw. Z-Drossel, realisiert werden. Bei Verwendung der Führung des Magnetankers zur pneumatischen Trennung kann in einer vorteilhaften Ausgestaltung der Erfindung die Führung selbst als Z-Drossel ausgelegt sein.

Das Magnetventil ist demnach als servogesteuertes Magnetventil ausgelegt, wobei die Magnetspule nicht nur zur Betätigung des Steuerventils eingesetzt wird, sondern auch auf den Magnetanker des Hauptventils wirkt. Von Vorteil ist dabei die Ausgestaltung des Magnetankers als Tauch- und Flachanker. Denn bei entsprechender Auslegung des Magnetkreises können die Feldlinien verstärkt über den Flachankerabschnitt geleitet werden, der gegenüber dem Tauchankerabschnitt aufgrund des größeren Durchmessers eine größere magnetische Grenzfläche aufweist. Beispielsweise kann die Magnetspule bereichsweise, insbesondere in einem dem Tauchankerabschnitt zugewandten Bereich, so ausgelegt werden, dass dieser einen erhöhten magnetischen Widerstand aufweist und im Extremfall sogar in Sättigung geht.

Die Ausgestaltung des Magnetankers als Tauch- und Flachanker ermöglicht somit eine Optimierung der Feldlinienführung, bei der die Feldlinien des Magnetkreises überwiegend durch axiale Arbeitsluftspalte geführt werden. Die Folge ist eine hohe Krafteinwirkung auf den Magnetanker des Hauptventils und - je nach Ausgestaltung des Steuerventils - auch auf dessen Magnetanker.

Gemäß einer bevorzugten Ausführungsform der Erfindung ist der Hub des Magnetankers durch einen Hubanschlag begrenzt. Der Magnetanker führt demnach definierte Hubbewegungen zwischen zwei Endlagen aus. Dabei kann insbesondere der als Flachanker ausgeführte Abschnitt des Magnetankers mit dem Hubanschlag zusammenwirken, so dass kein kraft-, form- und/oder stoffschlüssig mit dem Magnetanker verbundenes Zusatzteil erforderlich ist. Der Hubanschlag selbst kann durch die Magnetspule oder eine andere Komponente des Magnetkreises, beispielsweise einen die Magnetspule aufnehmenden Polkörper, ausgebildet werden.

Ferner bevorzugt ist der Magnetanker, insbesondere der als Tauchanker ausgeführte Abschnitt des Magnetankers, über eine Hülse geführt. Die Führung über den Tauchankerabschnitt ist besonders einfach realisierbar. Beispielsweise kann die Führung durch einen hülsenförmigen Abschnitt eines die Magnetspule aufnehmenden Polkörpers ausgebildet werden. Eine separate Hülse kann somit entfallen.

Des Weiteren wird vorgeschlagen, dass der Magnetanker, insbesondere der als Tauchanker ausgeführte Abschnitt des Magnetankers, und die Hülse gemeinsam mindestens einen Strömungskanal begrenzen, der den Druckraum mit einem Ventilraum verbindet, in dem das Ventilglied aufgenommen ist. Der mindestens eine Strömungskanal dient in diesem Fall als Zulauf- bzw. Z-Drossel. Zur sicheren Anbindung des Strömungskanals bzw. der Z-Drossel, insbesondere für den Fall, dass der Magnetanker am Hubanschlag anliegt, kann bzw. können der Magnetanker und/oder die Hülse mindestens eine sich in axialer Richtung erstreckende Aussparung, beispielsweise einen Anschliff und/oder eine Nut, aufweisen. Alternativ oder ergänzend kann das Führungsspiel im Bereich der Führung des Magnetankers vergrößert werden. Dies hat ferner den Vorteil, dass die radiale Feldeinkopplung während der Bestromung der Magnetspule erschwert wird.

In einer weiteren vorteilhaften Ausgestaltung der Erfindung ist zwischen dem Magnetanker und der Hülse ein Dichtelement vorhanden und der Druckraum ist über einen Strömungskanal mit einem das Ventilglied aufnehmenden Ventilraum verbunden, der als Bohrung, insbesondere als Drosselbohrung, im Magnetanker oder in der Hülse ausgebildet ist. Das heißt, dass die Z-Drossel nicht durch die Führung des Magnetankers ausgebildet wird, sondern durch einen als Bohrung bzw. Drosselbohrung ausgeführten separaten Strömungskanal.

Die über den mindestens einen Strömungskanal hergestellte pneumatische Verbindung zwischen dem Druckraum und dem Ventilraum stellt zugleich eine Verbindung des Ventilraums mit dem Steuerraum des Steuerventils sicher, da der Druckraum - vorzugsweise über eine Drossel - an den Steuerraum angebunden ist. In Schließstellung des Steuerventils herrscht somit in allen drei Räumen der gleiche Druck. Die pneumatische Verbindung der Räume gewährleistet ein sicheres Schließen des Steuerventils.

Im Falle eines den Hub des Magnetankers begrenzenden Hubanschlags ist dieser bevorzugt nichtdichtend ausgeführt, um die pneumatische Verbindung zwischen dem Ventilraum und dem Druckraum nicht zu unterbrechen. In Weiterbildung der Erfindung wird daher vorgeschlagen, dass der Magnetanker, insbesondere der als Flachanker ausgeführte Abschnitt des Magnetankers, und der Hubanschlag gemeinsam mindestens einen Strömungskanal begrenzen, der den Ventilraum über den vorzugsweise als Z-Drossel ausgebildeten Strömungskanal mit dem Druckraum verbindet. Der mindestens eine weitere Strömungskanal kann insbesondere als eine im Wesentlichen radial verlaufende Aussparung, insbesondere Nut, im Magnetanker und/oder im Hubanschlag ausgebildet sein.

Alternativ oder ergänzend wird vorgeschlagen, dass der Magnetanker, insbesondere der als Flachanker ausgeführte Abschnitt des Magnetankers, von mindestens einer Durchströmöffnung durchsetzt ist. Über die mindestens eine Durchströmöffnung kann ebenfalls eine pneumatische Verbindung zwischen dem Ventilraum und dem Druckraum hergestellt werden. Die mindestens eine Durchströmöffnung kann beispielsweise als axial oder schräg durch den als Flachanker ausgeführten Abschnitt verlaufende Bohrung ausgebildet sein.

In Weiterbildung der Erfindung wird vorgeschlagen, dass der Magnetanker, insbesondere der als Tauchanker ausgeführte Abschnitt des Magnetankers, eine umlaufende Querschnittsreduzierung aufweist. Im Bereich der umlaufenden Querschnittsverringerung weist der Magnetanker demnach einen reduzierten Außendurchmesser auf, so dass in diesem Bereich der radiale Luftspalt zwischen dem Magnetanker und der Führung steigt. Entsprechend erhöht sich der magnetische Widerstand in diesem Bereich. Dies wiederum führt zu einer Verminderung der radialen und Verstärkung der axialen Feldlinien. Die Querschnittsverringerung kann beispielsweise durch eine Eindrehung am Tauchankerabschnitt realisiert sein. Vorzugsweise ist die Querschnittsverringerung angrenzend an den als Flachanker ausgeführten Abschnitt des Magnetankers angeordnet, um die Feldlinien verstärkt über den axialen Arbeitsluftspalt zu führen.

Alternativ oder ergänzend wird vorgeschlagen, dass die Hülse, vorzugsweise der hülsenförmige Abschnitt des Polkörpers, einen umlaufenden Abschnitt aus einem nichtmagnetischen Material aufweist. Das nichtmagnetische Material führt ebenfalls zu einer Vergrößerung des radialen Luftspalts, so dass diese Maßnahme eine ähnliche Wirkung wie die zuvor vorgeschlagene Querschnittsverringerung des Magnetankers im als Tauchanker ausgeführten Abschnitt aufweist.

Vorzugsweise ist der umlaufende Abschnitt aus einem nichtmagnetischen Material bei vollem Hub des Magnetankers auf Höhe der Querschnittsreduzierung des Magnetankers angeordnet. Der nichtmagnetische Abschnitt der Hülse und die Querschnittsreduzierung des Magnetankers wirken in diesem Fall als Feldlinienweiche zusammen. Die Feldlinienweiche lässt bei noch geschlossenen Hauptventil die Feldlinien radial in den Magnetanker einkoppeln, wodurch sich - aufgrund des sehr geringen magnetischen Widerstands im magnetischen Kreis - eine hohe Kraft zum Öffnen des Steuerventils ergibt. Bei sich öffnendem bzw. geöffnetem Hauptventil wird der Bereich der Querschnittsverringerung in Überdeckung mit dem nichtmagnetischen Abschnitt der Hülse gebracht, so dass die radiale Eigenkopplung der Feldlinien verringert oder sogar gänzlich verhindert wird. Denn die Feldlinien lösen sich radial ab und schwenken zum Flachankerabschnitt um, da hier der magnetische Widerstand geringer ist. Die Feldlinienweiche ermöglicht somit die Bedienung zweier Arbeitsluftspalte mit einer Magnetspule, ohne dass ein Luftspalt den magnetischen Fluss im anderen Luftspalt reduziert. Auf diese Weise sind sehr kostengünstige, energie- und bauraumsparende Magnetventile herstellbar.

Das Steuerventil des vorgeschlagenen Magnetventils weist vorzugsweise einen zumindest abschnittsweise als Flachanker ausgeführten Magnetanker auf. Der Hub des Steuerventils kann somit klein gehalten werden. Entsprechend minimiert sich der Luftspalt am Magnetanker des Steuerventils, was sich günstig auf die Dimensionierung der Magnetspule auswirkt. Vorteilhafterweise bildet der Magnetanker des Steuerventils zugleich ein mit einem Dichtsitz zusammenwirkendes Ventilschließelement aus. Das Steuerventil kann demnach vergleichsweise einfach und bauraumsparend umgesetzt werden.

Der Magnetanker des Steuerventils ist vorzugsweise mittels einer Steuerventilfeder in Richtung des Dichtsitzes vorgespannt. Das heißt, dass das Steuerventil eine eigene Schließfeder aufweist. Die Steuerventilfeder kann somit unabhängig von der Feder des Hauptventils ausgelegt werden, insbesondere kann die Federkraft der Steuerventilfeder kleiner als die Federkraft der Feder des Hauptventils gewählt werden, so dass das Steuerventil mit reduzierter Kraft geöffnet werden kann. Dies wirkt sich günstig auf die Dimensionierung der Magnetspule und damit auf den Bauraumbedarf des Magnetventils aus. Die Magnetspule muss lediglich so groß dimensioniert werden, dass die in Öffnungsrichtung wirkenden Kräfte größer als die Summe aus pneumatischer Schließkraft am Steuerventil und der Steuerventilfederkraft ist. Auf diese Weise wird nicht nur eine kompakte Bauform erzielt, sondern zugleich der Energiebedarf des Magnetventils gesenkt.

Bevorzugt weist der Magnetanker des Steuerventils mindestens eine Durchströmöffnung zur Verbindung des Druckraums mit dem Steuerraum auf. Dies gilt insbesondere bei einem zumindest abschnittsweise als Flachanker ausgeführten Magnetanker. Die mindestens eine Durchströmöffnung kann insbesondere in einen dem Druckraum vorgelagerten Raum münden, der über die Drossel mit dem Druckraum verbunden ist. Die Drossel stellt sicher, dass es beim Öffnen des Steuerventils zu einem Druckabfall im Steuerraum kommt, da über die Drossel weniger Gas nachströmt als über den Dichtsitz des Steuerventils entweicht. Zugleich stellt das über die Drossel nachströmende Gas bei geschlossenem Steuerventil die erforderliche Schließ- und Dichtkraft sicher, um das Steuerventil geschlossen zu halten.

Des Weiteren kann vorgesehen sein, dass das Ventilglied des Hauptventils mittels einer Ventilgliedfeder in Richtung des Magnetankers vorgespannt ist. Aufgabe der Ventilgliedfeder ist es, das Öffnen des Hauptventils gegen den Druck im Ventilraum zu gewährleisten. Die Ventilgliedfeder ermöglicht es, eine Öffnungsdruckdifferenz zwischen dem Ventilraum und dem Leitungssystem beim Öffnen des Hauptventils sehr genau einzustellen, wodurch hohe Druckstöße im System wirksam vermieden werden können. Dadurch können Sicherheitseinrichtungen zum Schutz nachfolgender Bauteile, wie beispielsweise ein Druckminderer und/oder ein Mitteldrucksystem, einfacher und damit kostengünstiger ausgelegt werden. Die Federkraft der Ventilgliedfeder ist kleiner als die Federkraft der Feder, die den Magnetanker in Richtung des Ventilglieds vorspannt. Dadurch ist sichergestellt, dass der Magnetanker und das Ventilglied beim Schließen sicher in ihre jeweilige Ausgangslage zurückgestellt werden.

Bevorzugter Anwendungsbereich eines erfindungsgemäßen Magnetventils sind Wasserstofftanksysteme, so dass ferner ein Wasserstofftanksystem vorgeschlagen wird, das mindestens einen Druckgasbehälter und ein erfindungsgemäßes Magnetventil zum Absperren des Druckgasbehälters umfasst. Das Wasserstofftanksystem kann insbesondere in einem Brennstoffzellenfahrzeug oder in einem Fahrzeug mit Wasserstoffverbrennung zum Einsatz gelangen.

Bevorzugte Ausführungsformen der Erfindung und ihre Vorteile werden nachfolgend anhand der beigefügten Zeichnungen näher erläutert. Diese zeigen:
Figur 1 a)-f) jeweils einen schematischen Längsschnitt durch ein erstes erfindungsgemäßes Magnetventil in unterschiedlichen Schaltstellungen,
Figur 2 a)-f) jeweils einen schematischen Längsschnitt durch ein zweites erfindungsgemäßes Magnetventil in unterschiedlichen Schaltstellungen und
Figur 3 a)-f) jeweils einen schematischen Längsschnitt durch ein drittes erfindungsgemäßes Magnetventil in unterschiedlichen Schaltstellungen.

### Ausführliche Beschreibung der Zeichnungen

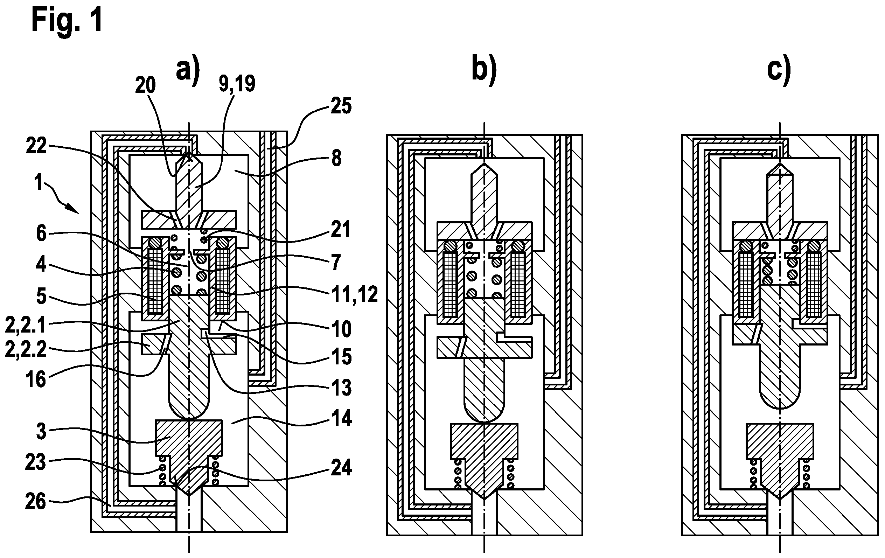

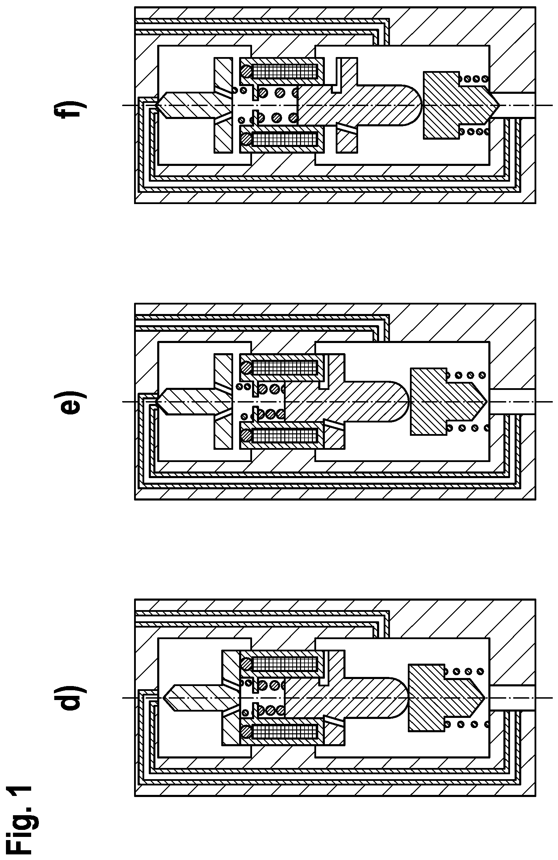

Das in der Figur 1 a)-f) dargestellte Magnetventil 1 weist eine ringförmige Magnetspule 5 auf, die in einem Polkörper 12 aufgenommen ist. Mit Hilfe der Magnetspule 5 ist eine Magnetkraft erzeugbar, die einerseits auf einen Magnetanker 19 eines Steuerventils 9, andererseits auf einen Magnetanker 2 des Hauptventils wirkt. Die beiden Magnetanker 2, 19 sind vorliegend koaxial angeordnet und bewegen sich gegenläufig.

Der Magnetanker 19 des Steuerventils 9 ist zumindest abschnittsweise als Flachanker ausgeführt und mittels einer Steuerventilfeder 21 in Richtung eines Dichtsitzes 20 vorgespannt. Der Magnetanker 19 bildet dabei zugleich ein mit dem Dichtsitz 20 zusammenwirkendes Ventilschließelement aus. In dem als Flachanker ausgeführten Abschnitt des Magnetankers 19 sind schräg verlaufende Durchströmöffnungen 22 ausgebildet.

Der Magnetanker 2 des Hauptventils weist einen ersten Abschnitt 2.1 auf, der als Tauchanker ausgeführt ist, sowie einen zweiten Abschnitt 2.2, der als Flachanker ausgeführt ist. Der Magnetanker 2 ist mit einem Ventilglied 3 koppelbar, das mit einem Dichtsitz 24 zusammenwirkt. Über die Federkraft einer Feder 4 ist der Magnetanker 2 in Richtung des Ventilglieds 3 vorgespannt. Die Führung des Magnetankers des 2 wird mit Hilfe einer Hülse 11 bewirkt, die vorliegend durch einen hülsenförmigen Abschnitt eines die Magnetspule 5 aufnehmenden Polkörpers 2 ausgebildet wird.

In der Figur 1a) ist das Magnetventil 1 bei unbestromter Magnetspule 5 und demzufolge in geschlossenem Zustand dargestellt. Im Steuerraum 8 sowie in einem Ventilraum 14, in dem das Ventilglied 3 des Hauptventils aufgenommen ist, herrscht jeweils Hochdruck. Denn in den Ventilraum 14 mündet eine Gasleitung 25, die vorzugsweise mit einem Speichervolumen eines Druckgasbehälters (nicht dargestellt) in Verbindung steht. Der Ventilraum 14 wiederum ist über die Führung des Magnetankers 2 an einen Druckraum 6 angebunden, der über eine Drossel 7 in Verbindung mit den Steuerraum 8 steht. Außerhalb des Magnetventils 1, das heißt in einer Gasleitung 26, herrscht Niederdruck. Neben den Federkräften der Steuerventilfeder 21 und der Feder 4 wirken demnach auch pneumatische Schließkräfte auf den Magnetanker 19 sowie das Ventilglied 3 des Hauptventils.

Zum Öffnen des Magnetventils 1 wird zunächst das Steuerventil 9 geöffnet. Hierzu wird die Magnetspule 5 bestromt, so dass sich ein Magnetfeld aufgebaut, dessen Magnetkraft den Magnetanker 19 aus dem Dichtsitz 20 hebt. Der Magnetanker 19 gelangt dabei zur Anlage am Polkörper 12 (siehe Figur 1b)). Über die im Magnetanker 19 ausgebildeten Durchströmöffnungen 22 ist dabei sichergestellt, dass der Steuerraum 8 weiterhin mit dem Druckraum 6 verbunden bleibt. Dies hat zur Folge, dass nicht nur der Druck im Steuerraum 8, sondern auch der Druck im Druckraum 6 fällt. Unterstützt durch die mit Hilfe der Magnetspule 5 erzeugten Magnetkräfte überwiegen nun die in Öffnungsrichtung auf den Magnetanker 2 wirkenden Kräfte, so dass dieser sich in Richtung der Magnetspule 5 bewegt, bis er zur Anlage an einem Hubanschlag 10 gelangt (siehe Figur 1c)). Die für eine Öffnungsbewegung des Magnetankers notwendige Volumenverschiebung erfolgt hauptventilseitig durch eine Zuströmung aus dem Druckgasbehälter in den Ventilraum 14 und steuerventilseitig durch eine Abströmung aus dem Druckraum 6, vorzugsweise über eine Drossel 7, in den Steuerraum 8 und von dort aus über den geöffneten Dichtsitz 20 in die Gasleitung 26. Bei einer gewünschten Schließbewegung des Magnetankers 2 hingegen wird der Dichtsitz 20 durch abschalten der Magnetkraft geschlossen, was zur Folge hat, dass die Volumenverschiebung steuerventilseitig nicht mehr über den Dichtsitz 20 erfolgen kann. In diesem Fall erfolgt die steuerventilseitige Volumenverschiebung durch einen entsprechenden pneumatischen Zufluss über die als Z-Drossel ausgebildete pneumatische Verbindung zwischen dem Ventilraum 14 und dem Druckraum 6. Zur Sicherstellung der Verbindung weist der Magnetanker 2 Strömungskanäle 13, 15 sowie mindestens eine Durchströmöffnung 16 auf, über die selbst dann eine pneumatische Verbindung hergestellt ist, wenn der Magnetanker 2 am Hubanschlag 10 anliegt.

Der Hub des Magnetankers 2 wird demnach mit Hilfe pneumatischer sowie magnetischer Kräfte bewirkt, wobei die besondere Ausgestaltung des Magnetankers 2, umfassend einen Tauchankerabschnitt 2.1 sowie einen Flachankerabschnitt 2.2, nicht nur zu einer Verstärkung der Magnetkräfte führt, sondern zugleich eine Optimierung der Feldlinienführung ermöglicht. Insbesondere kann der Magnetkreis derart ausgelegt werden, dass die Feldlinien verstärkt über den Flachankerabschnitt 2.2 führen. Die das Magnetfeld schwächende radiale Feldlinieneinkopplung wird auf diese Weise minimiert. Beispielsweise kann das Spiel im Bereich der Führung des Magnetankers 2 vergrößert werden, so dass der magnetische Widerstand im radialen Luftspalt steigt. Alternativ oder ergänzend kann der magnetische Widerstand durch einen Materialwechsel erhöht werden.

Während des Hubs des Magnetankers 2 löst sich dieser vom Ventilglied 3, so dass die Federkraft der Feder 4 keinen Einfluss mehr auf das Ventilglied 3 ausübt. Stattdessen entfaltet eine Ventilgliedfeder 23 ihre Wirkung und hebt das Ventilglied 3 mit Erreichen der Öffnungsdruckdifferenz zwischen der Gasleitung 26 und dem Ventilraum 14 aus dem Dichtsitz 24 (siehe Figur 1d)). Das Magnetventil 1 ist geöffnet.

In Offenstellung des Magnetventils 1 kommt es über den Ventilraum 14 zu einem Druckausgleich in den Gasleitungen 25 und 26. Bei völligem Druckausgleich werden das Hauptventil und das Steuerventil 9 rein magnetisch gegen die Federkraft der Federn 4, 21 offengehalten. Aufgrund der minimalen Luftspalte gelingt dies auch mit einem geringeren sogenannten Haltestrom an der Magnetspule 5. Üblicherweise wird zum Öffnen ein kurzzeitig höherer Strom, der sogenannte Anzugsstrom, gewählt. Ist dann das Ventil geöffnet, kann vom Anzugsstrom auf den geringeren Haltestrom umgeschaltet werden.

Zum Schließen des Magnetventils 1 wird die Bestromung der Magnetspule 5 beendet, so dass die Steuerventilfeder 21 den Magnetanker 19 des Steuerventils 9 in den Dichtsitz 20 zurückstellt (siehe Figur 1e)). Bei geschlossenem Steuerventil 9 füllt sich der Steuerraum 8 mit Gas aus dem Ventilraum 14, so dass der Druck im Steuerraum 8 wieder steigt. Gleiches gilt für den Druck im Druckraum 6, der über die Z-Drossel zwischen dem Ventilraum 14 und dem Druckraum 6 befüllt wird, so dass auch der Druck im Druckraum 6 ansteigt. Dies führt dazu, dass die auf den Magnetanker 2 in Schließrichtung wirkenden Kräfte überwiegen und den Magnetanker 2 in seine Ausgangslage zurückstellen. Der Magnetanker 2 gelangt dabei zur Anlage am Ventilglied 3 und drückt dieses in den Dichtsitz 24 (siehe Figur 1f)).

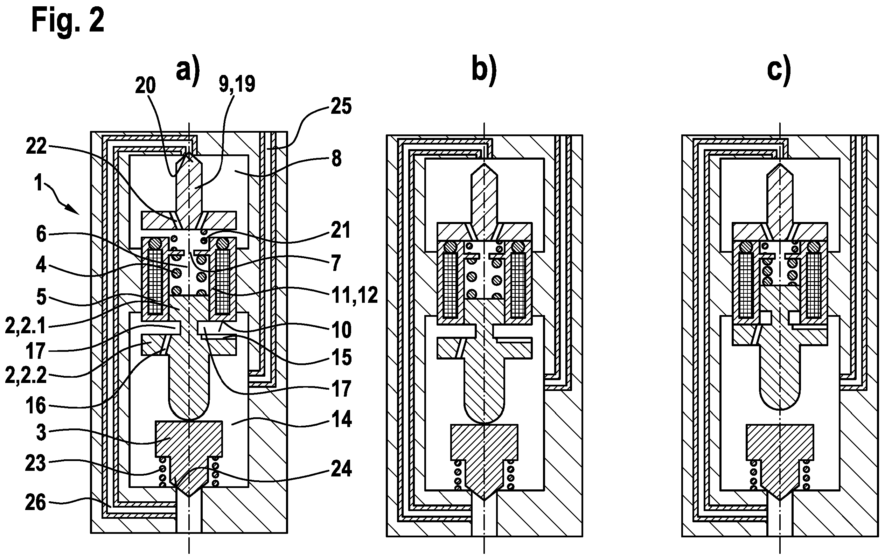

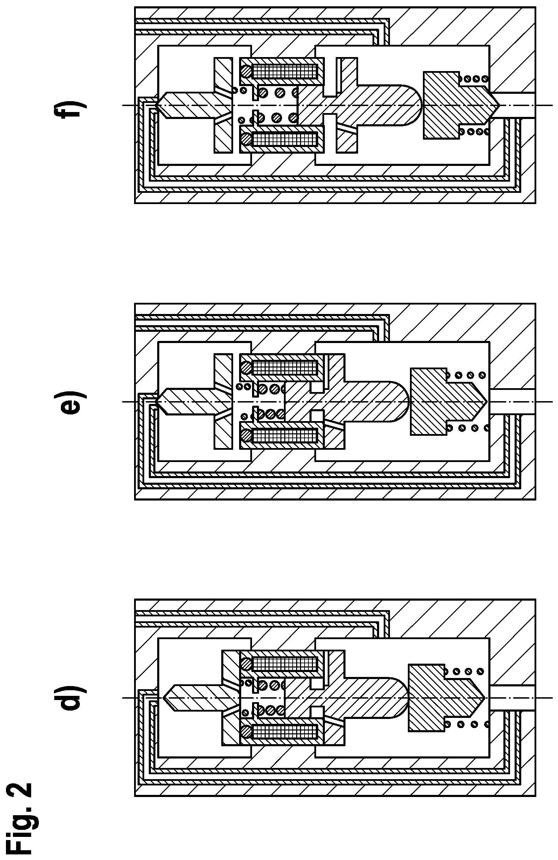

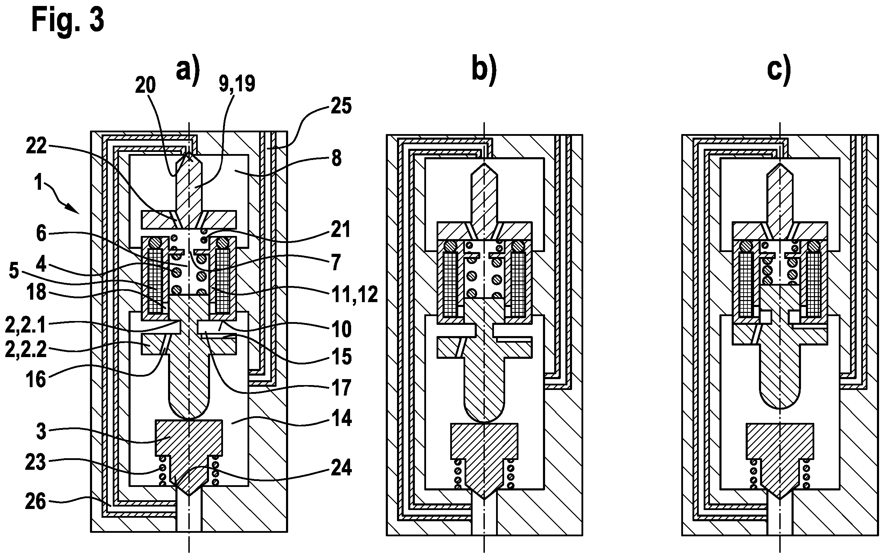

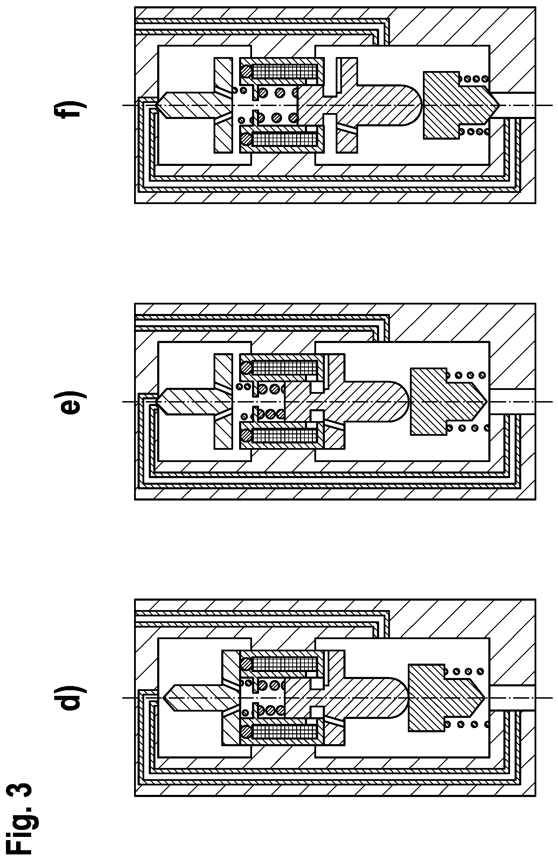

Durch weiterbildende Maßnahmen kann eine weitere Optimierung der Feldlinienführung erzielt werden. Bevorzugte Maßnahmen werden nachfolgend anhand der Figuren 2 und 3 beschrieben.

Das Magnetventil 2 der Figur 2 a)-f) weist ein Hauptventil mit einem modifizierten Magnetanker 2 auf. Denn im Bereich des als Tauchanker ausgeführten Abschnitts 2.1 weist der Magnetanker 2 eine Querschnittsreduzierung 17 auf. Diese trägt dazu bei, dass die Feldlinien des Magnetfelds verstärkt durch den als Flachanker ausgebildeten Abschnitt 2.2 verlaufen, da im Bereich der Querschnittsreduzierung 17 der radiale Luftspalt vergrößert und damit der magnetische Widerstand erhöht ist. Die Querschnittsreduzierung 17 kann in einfacher Weise durch eine Eindrehung am Magnetanker 2 realisiert werden. Vorzugsweise ist die Querschnittsreduzierung 17 unmittelbar angrenzend an den als Flachanker ausgeführten Abschnitt 2.2 angeordnet, so dass im Flachankerabschnitt 2.2 ausgebildete Strömungskanäle 15 und/oder Durchströmöffnungen 16 in diesen Bereich münden können, um die notwendige pneumatische Verbindung des Ventilraums 14 mit dem Druckraum 6 herzustellen.

Die Funktionsweise des Magnetventils 1 der Figur 2 entspricht der des Magnetventils 1 der Figur 1. Die Figur 2a) zeigt das Magnetventil 1 bei unbestromter Magnetspule 5, das heißt im geschlossenen Zustand. Zum Öffnen wird die Magnetspule 5 bestromt, so dass sich ein Magnetfeld aufbaut, dessen Magnetkraft den Magnetanker 19 des Steuerventils 9 aus dem Dichtsitz 20 hebt (siehe Figur 2b)). Bei geöffnetem Steuerventil 9 strömt Gas aus dem Steuerraum 8 in die Gasleitung 26, so dass der Druck im Steuerraum 8 fällt. Gleiches gilt für den Druck im Druckraum 6, der über die Drossel 7 an den Steuerraum 8 angebunden ist. Der Druckabfall im Druckraum 6 führt zu einer Entlastung des Magnetankers 2 des Hauptventils, so dass die in Öffnungsrichtung wirkenden Kräfte überwiegen und den Magnetanker 2 in Richtung der Magnetspule 5 bewegen, bis der als Flachanker ausgeführte Abschnitt 2.2 zur Anlage am Hubanschlag 10 gelangt (siehe Figur 2c)). Da sich dabei der Magnetanker 2 vom Ventilglied 3 löst, vermag die Ventilgliedfeder 23 mit zunehmender Befüllung der Gasleitung 26 über das Steuerventil 9 bei Erreichen der Öffnungsdruckdifferenz das Ventilglied 3 aus dem Dichtsitz 24 zu heben (siehe Figur 2d)). Für den Fall, dass die Gasleitung 26 und der Ventilraum 14 vor Bestromungsbeginn druckausgeglichen sind, erfolgt mit Öffnen des Steuerventils 9 und dem anschließenden Öffnen des Magnetankers 2 ein unmittelbares Öffnen des Ventilglieds 3. Nunmehr ist auch das Hauptventil geöffnet. Zum Schließen wird die Bestromung der Magnetspule 5 beendet, so dass die Steuerventilfeder 21 den Magnetanker 19 in den Dichtsitz 20 zurückstellt (siehe Figur 2e)). Bei geschlossenem Steuerventil 9 steigt der Druck im Steuerraum 8 wieder an, da dieser mit dem Ventilraum 14 pneumatisch verbunden ist. In gleicher Weise steigt über die Z-Drossel auch der Druck im Druckraum 6 an, so dass die in Schließrichtung auf den Magnetanker 2 wirkenden Kräfte überwiegen und sich dieser in Richtung des Dichtsitzes 24 bewegt. Dabei gelangt der Magnetanker 2 zur Anlage am Ventilglied 3, so dass der Magnetanker 2 das Ventilglied 3 in den Dichtsitz 24 drückt. Damit ist das Magnetventil 1 geschlossen (siehe Figur 2f)).

Das Magnetventil 1 der Figur 3 weist zur Optimierung der Feldlinienführung neben der Querschnittsreduzierung 17 des Magnetankers 2 eine der Führung de Magnetankers 2 dienende Hülse 11 auf, die einen Abschnitt 18 aus einem nichtmagnetischen Material besitzt. Der Abschnitt 18 wirkt mit der Querschnittsreduzierung 17 eine Feldlinienweiche ausbildend zusammen. Die Feldlinienweiche erleichtert die Betätigung des Steuerventils 9 und des Hauptventils mit nur einer Magnetspule 5. Insbesondere führt der magnetische Fluss in dem einen Luftspalt nicht zu einer Reduzierung des magnetischen Flusses im jeweils anderen Luftspalt, so dass auf diese Weise ein besonders kostengünstiges sowie energie- und bauraumoptimiertes Magnetventil 1 geschaffen wird.

Da in der Figur 3 die Hülse 11 durch einen hülsenförmigen Abschnitt des Polkörpers 12 gebildet wird, weist dieser den Abschnitt 18 aus einem nichtmagnetischen Material auf. Aufgrund der Verwendung eines nichtmagnetischen Materials führt der Abschnitt 18 zu einer Vergrößerung des radialen Luftspalts, die sich insbesondere dann als Feldlinienweiche darstellt, wenn durch den Hub des Magnetanker 2 die Querschnittsreduzierung 17 in Überdeckung mit dem Abschnitt 18 gebracht wird (siehe Figur 3c)). Zuvor, das heißt bei geschlossenem Hauptventil (siehe Figur 3a)), lässt die Feldlinienweiche Feldlinien des Magnetfelds über den radialen Luftspalt in den als Tauchanker ausgeführten Abschnitt 2.1 des Magnetankers 2 einkoppeln. Da hier der magnetische Widerstand größer als im Bereich des axialen Luftspalts zwischen dem Magnetanker 19 des Steuerventils 9 und dem Polkörper 12 ist, ergibt sich eine hohe magnetische Kraft, die zum Öffnen des Steuerventils 9 genutzt werden kann (siehe Figur 3b)). Erst bei sich öffnendem bzw. geöffnetem Magnetanker 2 des Hauptventils wird der Bereich der Querschnittsreduzierung 17 in Überdeckung mit dem Abschnitt 18 der Hülse 11 gebracht, so dass eine radiale Einkopplung der Feldlinien verhindert bzw. stark reduziert wird. Die Feldlinien lösen sich dadurch radial ab und schwenken zum Flachankerabschnitt 2.2 des Magnetankers 2 um, welche für die Feldlinien den geringeren magnetischen Widerstand darstellt. Da sich der Magnetanker 2 während seines Hubs vom Ventilglied 3 löst, wird dieses von der Ventilgliedfeder 23 aus dem Dichtsitz 24 gehoben (siehe Figur 3d)). Zum Schließen wird - analog der Figuren 1 und 2 - die Bestromung der Magnetspule 5 beendet, so dass zunächst das Steuerventil 9 (siehe Figur 3e)) und anschließend das Hauptventil schließen (siehe Figur 3f)).

## Patentansprüche

1. Magnetventil (1), insbesondere Absperrventil geeignet für einen Gastank, umfassend einen hubbeweglichen Magnetanker (2), der mit einem hubbeweglichen Ventilglied (3) gekoppelt ist, wobei der Magnetanker (2) in Richtung des Ventilglieds (3) mittels einer Feder (4) vorgespannt ist, ferner umfassend eine ringförmige Magnetspule (5) zur Einwirkung auf den Magnetanker (2), wobei die Magnetspule (5) den Magnetanker (2) abschnittsweise umgibt, wobei der Magnetanker (2) einen als Tauchanker ausgeführten Abschnitt (2.1) aufweist, wobei der als Tauchanker ausgeführte Abschnitt (2.1) innerhalb der Magnetspule (5) einen Druckraum (6) begrenzt, der, über eine Drossel (7), pneumatisch mit einem Steuerraum (8) verbunden ist, **dadurch gekennzeichnet, dass** der Magnetanker (2) einen als Flachanker ausgeführten Abschnitt (2.2) aufweist, und dass der Steuerraum (8) durch Öffnen eines ebenfalls mit Hilfe der Magnetspule (5) betätigbaren Steuerventils (9) entlastbar ist.

2. Magnetventil (1) nach Anspruch 1,
**dadurch gekennzeichnet, dass** der Hub des Magnetankers (2) durch einen Hubanschlag (10) begrenzt ist, wobei vorzugsweise der als Flachanker ausgeführte Abschnitt (2.2) des Magnetankers (2) mit dem Hubanschlag (10) zusammenwirkt.

3. Magnetventil (1) nach Anspruch 1 oder 2,
**dadurch gekennzeichnet, dass** der Magnetanker (2), insbesondere der als Tauchanker ausgeführte Abschnitt (2.1) des Magnetankers (2), über eine Hülse (11) geführt ist, die vorzugsweise durch einen hülsenförmigen Abschnitt eines die Magnetspule (5) aufnehmenden Polkörpers (12) ausgebildet wird.

4. Magnetventil (1) nach Anspruch 3,
**dadurch gekennzeichnet, dass** der Magnetanker (2), insbesondere der als Tauchanker ausgeführte Abschnitt (2.1) des Magnetankers (2), und die Hülse (11) gemeinsam mindestens einen Strömungskanal (13) begrenzen, der den Druckraum (6) mit einem Ventilraum (14) verbindet, in dem das Ventilglied (3) aufgenommen ist.

5. Magnetventil (1) nach Anspruch 3,
**dadurch gekennzeichnet, dass** zwischen dem Magnetanker (2) und der Hülse (11) ein Dichtelement vorhanden ist und der Druckraum (6) über einen Strömungskanal mit einem das Ventilglied (3) aufnehmenden Ventilraum (14) verbunden ist, der als Bohrung, insbesondere als Drosselbohrung, im Magnetanker (2) oder in der Hülse (11) ausgebildet ist.

6. Magnetventil (1) nach Anspruch 4 oder 5,
**dadurch gekennzeichnet, dass** der Magnetanker (2), insbesondere der als Flachanker ausgeführte Abschnitt (2.2) des Magnetankers (2), und der Hubanschlag (10) gemeinsam mindestens einen Strömungskanal (15) begrenzen, der den Druckraum (6) mit dem Ventilraum (14) verbindet.

7. Magnetventil (1) nach einem der vorhergehenden Ansprüche,
**dadurch gekennzeichnet, dass** der Magnetanker (2), insbesondere der als Flachanker ausgeführte Abschnitt (2.2) des Magnetankers (2), von mindestens einer Durchströmöffnung (16) durchsetzt ist.

8. Magnetventil (1) nach einem der vorhergehenden Ansprüche,
**dadurch gekennzeichnet, dass** der Magnetanker (2), insbesondere der als Tauchanker ausgeführte Abschnitt (2.1) des Magnetankers (2), eine umlaufende Querschnittsreduzierung (17) aufweist, die vorzugsweise angrenzend an den als Flachanker ausgeführten Abschnitt (2.2) des Magnetankers (2) angeordnet ist.

9. Magnetventil (1) nach einem der Ansprüche 3 bis 8,
**dadurch gekennzeichnet, dass** die Hülse (11), vorzugsweise der hülsenförmige Abschnitt des Polkörpers (12), einen umlaufenden Abschnitt (18) aus einem nichtmagnetischen Material aufweist, wobei vorzugsweise der Abschnitt (18) bei vollem Hub des Magnetankers (2) auf Höhe der Querschnittsreduzierung (17) des Magnetankers (2) angeordnet ist.

10. Magnetventil (1) nach einem der vorhergehenden Ansprüche,
**dadurch gekennzeichnet, dass** das Steuerventil (9) einen zumindest abschnittsweise als Flachanker ausgeführten Magnetanker (19) aufweist, der vorzugsweise zugleich ein mit einem Dichtsitz (20) zusammenwirkendes Ventilschließelement ausbildet.

11. Magnetventil (1) nach Anspruch 10,
**dadurch gekennzeichnet, dass** der Magnetanker (19) des Steuerventils (9) mittels einer Steuerventilfeder (21) in Richtung des Dichtsitzes (20) vorgespannt ist.

12. Magnetventil (1) nach Anspruch 10 oder 11,
**dadurch gekennzeichnet, dass** der Magnetanker (19) des Steuerventils (9) mindestens eine Durchströmöffnung (22) zur Verbindung des Druckraums (6) mit dem Steuerraum (8) aufweist.

13. Magnetventil (1) nach einem der vorhergehenden Ansprüche,
**dadurch gekennzeichnet, dass** das Ventilglied (3) mittels einer Ventilgliedfeder (23) in Richtung des Magnetankers (2) vorgespannt ist, wobei die Federkraft der Ventilgliedfeder (23) kleiner als die Federkraft der Feder (4) ist, die den Magnetanker (2) in Richtung des Ventilglieds (3) vorspannt.

14. Wasserstofftanksystem, umfassend mindestens einen Druckgasbehälter und Magnetventil (1) nach einem der vorhergehenden Ansprüche zum Absperren des Druckgasbehälters.

## Claims

1. Solenoid valve (1), in particular shut-off valve suitable for a gas tank, comprising a lifting magnet armature (2), which is coupled to a lifting valve member (3), wherein the magnet armature (2) is preloaded in the direction of the valve member (3) by means of a spring (4), further comprising an annular solenoid coil (5) for acting on the magnet armature (2), wherein the solenoid coil (5) surrounds the magnet armature (2) in portions, wherein the magnet armature (2) has a portion (2.1) embodied as a solenoid plunger, wherein the portion (2.1) embodied as a solenoid plunger within the solenoid coil (5) delimits a pressure chamber (6) which by way of a restrictor (7) is pneumatically connected to a control chamber (8), **characterized in that** the magnet armature (2) has a portion (2.2) embodied as a flat armature, and that the control chamber (8) can be relieved by opening a control valve (9) which can also be operated by means of the solenoid coil (5).

2. Solenoid valve (1) according to Claim 1,
**characterized in that** the stroke of the magnet armature (2) is delimited by a stroke travel stop (10), wherein preferably the portion (2.2) of the magnet armature (2) embodied as a flat armature interacts with the stroke travel stop (10).

3. Solenoid valve (1) according to Claim 1 or 2,
**characterized in that** the magnet armature (2), in particular the portion (2.1) of the magnet armature (2) embodied as a solenoid plunger, is guided over a sleeve (11) which is preferably formed by a sleeve-shaped portion of a pole body (12) receiving the solenoid coil (5).

4. Solenoid valve (1) according to Claim 3,
**characterized in that** the magnet armature (2), in particular the portion (2.1) of the magnet armature (2) embodied as a solenoid plunger, and the sleeve (11) conjointly delimit at least one flow duct (13),which connects the pressure chamber (6) to a valve chamber (14) in which the valve member (3) is received.

5. Solenoid valve (1) according to Claim 3,
**characterized in that** a sealing element is present between the magnet armature (2) and the sleeve (11), and the pressure chamber (6) is connected via a flow duct to a valve chamber (14) that receives the valve member (3) and is formed as a bore, in particular as a throttle bore, in the magnet armature (2) or in the sleeve (11).

6. Solenoid valve (1) according to Claim 4 or 5,
**characterized in that** the magnet armature (2), in particular the portion (2.2) of the magnet armature (2) embodied as a flat armature, and the stroke travel stop (10) conjointly delimit at least one flow duct (15) which connects the pressure chamber (6) to the valve chamber (14).

7. Solenoid valve (1) according to one of the preceding claims,
**characterized in that** the magnet armature (2), in particular the portion (2.2) of the magnet armature (2) embodied as a flat armature, is penetrated by at least one flow opening (16).

8. Solenoid valve (1) according to one of the preceding claims,
**characterized in that** the magnet armature (2), in particular the portion (2.1) of the magnet armature (2) embodied as a solenoid plunger, has an encircling cross-sectional reduction (17), which is preferably disposed adjacent to the portion (2.2) of the magnet armature (2) embodied as a flat armature.

9. Solenoid valve (1) according to one of Claims 3 to 8,
**characterized in that** the sleeve (11), preferably the sleeve-shaped portion of the pole body (12), has an encircling portion (18) of a non-magnetic material,
wherein preferably the portion (18) is disposed so as to be level with the cross-sectional reduction (17) of the magnet armature (2) when the magnet armature (2) is at full lift.

10. Solenoid valve (1) according to one of the preceding claims,
**characterized in that** the control valve (9) has a magnet armature (19) embodied at least in portions as a flat armature, which preferably simultaneously forms a valve closing element that interacts with a seal seat (20).

11. Solenoid valve (1) according to Claim 10, **characterized**
**in that** the solenoid armature (19) of the control valve (9) is preloaded in the direction of the seal seat (20) by means of a control valve spring (21).

12. Solenoid valve (1) according to Claim 10 or 11,
**characterized in that** the magnet armature (19) of the control valve (9) has at least one flow opening (22) for connecting the pressure chamber (6) to the control chamber (8).

13. Solenoid valve (1) according to one of the preceding claims,
**characterized in that** the valve member (3) is preloaded in the direction of the magnet armature (2) by means of a valve member spring (23), wherein the spring force of the valve member spring (23) is smaller than the spring force of the spring (4) that preloads the magnet armature (2) in the direction of the valve member (3).

14. Hydrogen tank system comprising at least one pressurized gas tank and a solenoid valve (1) according to one of the preceding claims for shutting off the pressurized gas tank.

## Revendications

1. Électrovanne (1), notamment vanne d'arrêt adaptée à un réservoir de gaz, comprenant un induit magnétique (2) mobile en course, qui est couplé à un organe de vanne (3) mobile en course, l'induit magnétique (2) étant précontraint en direction de l'organe de vanne (3) au moyen d'un ressort (4), comprenant en outre une bobine magnétique (5) annulaire pour agir sur l'induit magnétique (2), la bobine magnétique (5) entourant l'induit magnétique (2) par sections, l'induit magnétique (2) présentant une section (2.1) réalisée sous forme d'induit plongeant, la section (2.1) réalisée sous forme d'induit plongeant délimitant à l'intérieur de la bobine magnétique (5) une chambre de pression (6) qui est reliée pneumatiquement à une chambre de commande (8) par l'intermédiaire d'un étranglement (7), **caractérisée en ce que** l'induit magnétique (2) présente une section (2.2) réalisée sous forme d'induit plat, et **en ce que** la chambre de commande (8) peut être déchargée par l'ouverture d'une vanne de commande (9) pouvant également être actionnée à l'aide de la bobine magnétique (5).

2. Électrovanne (1) selon la revendication 1,
**caractérisée en ce que** la course de l'induit magnétique (2) est limitée par une butée de course (10), de préférence la section (2.2) de l'induit magnétique (2) réalisée sous forme d'induit plat coopérant avec la butée de course (10).

3. Électrovanne (1) selon la revendication 1 ou 2,
**caractérisée en ce que** l'induit magnétique (2), notamment la section (2.1) de l'induit magnétique (2) réalisée sous forme d'induit plongeant, est guidée par l'intermédiaire d'une douille (11) qui est de préférence réalisée par une section en forme de douille d'un corps polaire (12) recevant la bobine magnétique (5).

4. Électrovanne (1) selon la revendication 3,
**caractérisée en ce que** l'induit magnétique (2), notamment la section (2.1) de l'induit magnétique (2) réalisée sous forme d'induit plongeant, et la douille (11) délimitent ensemble au moins un canal d'écoulement (13) qui relie la chambre de pression (6) à une chambre de vanne (14) dans laquelle est reçu l'organe de vanne (3).

5. Électrovanne (1) selon la revendication 3,
**caractérisée en ce qu'**un élément d'étanchéité est présent entre l'induit magnétique (2) et la douille (11) et la chambre de pression (6) est reliée par l'intermédiaire d'un canal d'écoulement à une chambre de vanne (14) recevant l'organe de vanne (3), laquelle est réalisée sous forme d'alésage, notamment d'alésage d'étranglement, dans l'induit magnétique (2) ou dans la douille (11).

6. Électrovanne (1) selon la revendication 4 ou 5,
**caractérisée en ce que** l'induit magnétique (2), notamment la section (2.2) de l'induit magnétique (2) réalisée sous forme d'induit plat, et la butée de course (10) délimitent ensemble au moins un canal d'écoulement (15) qui relie la chambre de pression (6) à la chambre de vanne (14).

7. Électrovanne (1) selon l'une quelconque des revendications précédentes,
**caractérisée en ce que** l'induit magnétique (2), notamment la section (2.2) de l'induit magnétique (2) réalisée sous forme d'induit plat, est traversée par au moins une ouverture de passage (16).

8. Électrovanne (1) selon l'une quelconque des revendications précédentes,
**caractérisée en ce que** l'induit magnétique (2), notamment la section (2.1) de l'induit magnétique (2) réalisée sous forme d'induit plongeant, présente une réduction de section transversale (17) périphérique, qui est de préférence agencée de manière adjacente à la section (2.2) de l'induit magnétique (2) réalisée sous forme d'induit plat.

9. Électrovanne (1) selon l'une quelconque des revendications 3 à 8,
**caractérisée en ce que** la douille (11), de préférence la section en forme de douille du corps polaire (12), présente une section périphérique (18) en un matériau non magnétique, la section (18) étant de préférence agencée à hauteur de la réduction de section transversale (17) de l'induit magnétique (2) lorsque l'induit magnétique (2) est en pleine course.

10. Électrovanne (1) selon l'une quelconque des revendications précédentes,
**caractérisée en ce que** la vanne de commande (9) présente un induit magnétique (19) réalisé au moins par sections sous forme d'induit plat, qui forme de préférence en même temps un élément de fermeture de vanne coopérant avec un siège d'étanchéité (20).

11. Électrovanne (1) selon la revendication 10, **caractérisée en ce que**
l'induit magnétique (19) de la vanne de commande (9) est précontraint en direction du siège d'étanchéité (20) au moyen d'un ressort de vanne de commande (21).

12. Électrovanne (1) selon la revendication 10 ou 11,
**caractérisée en ce que** l'induit magnétique (19) de la vanne de commande (9) présente au moins une ouverture de passage (22) pour relier la chambre de pression (6) à la chambre de commande (8).

13. Électrovanne (1) selon l'une quelconque des revendications précédentes,
**caractérisée en ce que** l'organe de vanne (3) est précontraint en direction de l'induit magnétique (2) au moyen d'un ressort d'organe de vanne (23), la force de ressort du ressort d'organe de vanne (23) étant inférieure à la force de ressort du ressort (4) qui précontraint l'induit magnétique (2) en direction de l'organe de vanne (3).

14. Système de réservoir d'hydrogène, comprenant au moins un récipient de gaz sous pression et une électrovanne (1) selon l'une quelconque des revendications précédentes pour fermer le récipient de gaz sous pression.
